# EUROPÄISCHE PATENTSCHRIFT

(11) **EP 0 370 522 B1**
(45) Veröffentlichungstag und Bekanntmachung des Hinweises auf die Patenterteilung: **02.03.1994**
(21) Anmeldenummer: 89121738.2
(22) Anmeldetag: 24.11.1989
(51) Int. Cl.: A61C 8/00

(54) **Vorrichtung zur Befestigung eines Zahnersatzes an einem menschlichen Kiefer**
Device for fixing a dental prosthesis to a human jawbone
Dispositif de fixation d'une prothèse dentaire sur un os maxillaire humaine

(30) Priorität: 25.11.1988 DE 3839837
(43) Veröffentlichungstag der Anmeldung: 30.05.1990
(73) Patentinhaber: Lauks, Nikola, Dr., D-22397 Hamburg (DE)
(72) Erfinder: Lauks, Nikola, Dr., D-22397 Hamburg (DE)
(74) Vertreter: Gosch, Wolf-Dietrich

(56) Entgegenhaltungen:
- EP-A- 0 075 525
- WO-A-85/02337
- DE-U- 8 717 235

## Beschreibung

Die Erfindung betrifft eine Vorrichtung zur Befestigung eines Zahnersatzes an einem menschlichen Kiefer gemäß dem ersten Teil von Anspruch 1.

Eine derartige Vorrichtung ist aus der WO-A- 8 502 337 oder der EP-A- 0 075 525 bekannt.

Es sind Vorrichtungen bekannt, bei denen ein relativ großer Verankerungsteil in den Kieferknochen eines Patienten versenkt wird, nachdem im wesentlichen freihändig eine entsprechende Bohrkavität geschaffen worden ist. Der Verankerungsteil weist eine rauhe Oberfläche und einige Durchbrüche auf, an denen das Knochengewebe beim Einheilungsvorgang ansetzen kann, um das Implantat am Knochengewebe festzulegen. Der Zwischenraum zwischen dem Implantat und der dieses umgebenden Spongiosa ist sehr anfällig für Infektionen. Da durch die freihändige Implantationsmethode die Größe dieses Zwischenraumes schwer zu kontrollieren ist, ist dieser Risikofaktor für Infektionen erheblich. Ferner weisen die üblichen Implantate Verankerungsteile mit einem Durchmesser von ca. 4 mm auf, so daß der Einsatzbereich für derartige Implantate von vornherein bei einer geringen Knochenbreite des Kiefers ausgeschlossen ist. Am Implantat wird unter Verwendung von Distanzscheiben eine Krone mit dem damit verbundenen Zahnersatz festgeschraubt. Die Schraube durchdringt dabei den Zahnersatz und ragt in das Implantat hinein. Die Beschädigung des Zahnersatzes durch die Schraube muß verfüllt werden. Das bedeutet, daß der Zahnersatz am Kiefer unentfernbar festgelegt ist. Er kann mithin nicht herausgenommen und ordnungsgemäß gereinigt werden.

Durch die Kaubewegungen des Patienten kann sich die Schraube, mit der mit Krone an dem Implantat festgeschraubt ist, lösen, so daß der Zahnersatz locker wird. Dieser Mangel muß dadurch behoben werden, daß der Zahnersatz an der Stelle der Verschraubung erneut angebohrt wird, damit die Schraube nachgezogen werden kann.

Aufgabe der vorliegenden Erfindung ist es, eine Vorrichtung der eingangs genannten Art zu schaffen, die ein sicheres Einheilen des Implantates bei dem Patienten ermöglicht und diesen mit einem dauerhaften, hygienisch einwandfreien und mit hohem Tragekomfort ausgestattenen Zahnersatz zu versehen.

Diese Aufgabe wird durch die Vorrichtung nach Anspruch 1 gelöst.

Damit ist es möglich, daß zunächst das Implantat in den Kieferknochen des Patienten implantiert wird und dort einheilen kann, bis nach dem Einheilungsprozeß die Primärkrone auf das Implantat aufgeschraubt werden kann. Durch eine vollständige Anpassung der Sekundärkrone an die Primärkrone kann die Sekundärkrone auf die Primärkrone aufgeschoben werden und sitzt dort durch eine vorher zu definierende Haftreibung fest. Es ist möglich, sowohl das Implantat als auch die Primärkrone und die Sekundärkrone industriell vorzufertigen, da lediglich die Sekundärkrone mit dem individuell für den Patienten anzufertigenden Zahnersatz verbunden werden muß. Da lediglich die Primärkrone am Implantat festgeschraubt wird, ist auch durch das Aufsetzen der Sekundärkrone die Verschraubung mit dem Implantat hinreichend geschützt.

Da die Sekundärkrone an der Primärkrone lediglich durch Haftreibung befestigt ist, ist es möglich, den Zahnersatz zu Reinigungszwecken aus dem Mund des Patienten zu entfernen und nach der Reinigung erneut durch Aufsetzen wieder zu befestigen.

Gemäß einer bevorzugten Ausführungsform der Erfindung besteht das Implantat im wesentlichen aus einem zylindrisch bis leicht konisch geformten Verankerungsteil, das mit in seinen Längsrichtungen verlaufenden Riefen versehen ist. Hierdurch wird eine erhebliche Vergrößerung der Oberfläche des Verankerungsteiles herbeigeführt, wodurch es möglich ist, den Durchmesser des Verankerungsteiles erheblich zu reduzieren. Wegen der Riefen bleibt gleichwohl eine ausreichend große Oberfläche des Verankerungsteils erhalten, um einen sicheren Halt des Verankerungsteils im Knochengewebe, insbesondere in der Spongiosa zu gewährleisten. Nach dem Einsetzen des Implantates in die Bohrkavität können dort vorhandene Reste von Luft und Blut nach außen abfließen, so daß insoweit vorhandene Infektionsrisiko nahezu vollständig beseitigt werden kann. Ferner wird vermieden, daß in der Bohrkavität beim Einsetzen des Implantates durch einen Stau des Blut und Luft-Gemisches ein Überdruck entsteht, der das Einsetzen behindert.

Gemäß einer weiteren bevorzugten Ausführungsform der Erfindung ist das Implantat in seinem der Krone zugewandten Bereich mit einem Ringflansch radial umgeben, der einen den Kieferknochen im Bereich der Compacta abschließenden Knochenschlußteil ausbildet. Dieser wird in eine entsprechend angepaßte Versenkung in der Compacta eingesetzt, so daß der intrakapillare Raum zwischen dem Implantat und der Bohrkavität von der Außenwelt abgeschlossen werden kann, wodurch eine Infektion vermieden wird. Dies wird durch die intakte Schleimhaut unterstützt, die sich naturgemäß nach der Implantation über dem Knochenschlußteil des Implantates schließt.

Gemäß einer weiteren bevorzugten Ausführungsform der Erfindung ist der Kronenträger im Abstand zum Ringflansch angeordnet, und erfindungsgemäß ist der Kronenträger federnd mit dem Implantat verbunden. Damit kann die mechanische Belastung, die zwischen dem Implantat und dem das Implantat umgebenden Knochengewebe entsteht, vermindert werden. Die durch die Kaubewegungen oder sonstigen Druck und Schuberscheinungen hervorgerufenen Belastungen werden nicht unmittelbar über das Implantat in das Knochengewebe eingeleitet, weil die Resilianz des intramobilen Elementes des Implantates sehr viel größer ist als die Resilianz des Zahnfleisches. Dies bedeutet, daß das das Implantat umgebende Knochengewebe in den Grenzen der physiologischen Belastung beansprucht wird, und der Restdruck durch die Auflagefläche des Zahnersatzes über das Zahnfleisch in den Kieferknochen eingeleitet wird. Durch die Resilianz des intramobilen Elementes des Implantates wird der Druck also nicht auf den Implantatkörper übertragen, welches bei starren Implantaten der Fall ist. Dies steigert die Lebensdauer des Implantates.

Weitere Einzelheiten der Erfindung ergeben sich aus der nachfolgenden ausführlichen Beschreibung und den beigefügten Zeichnungen, in denen zwei Ausführungsformen der Erfindung beispielsweise veranschaulicht sind.

In den Zeichnungen zeigen:

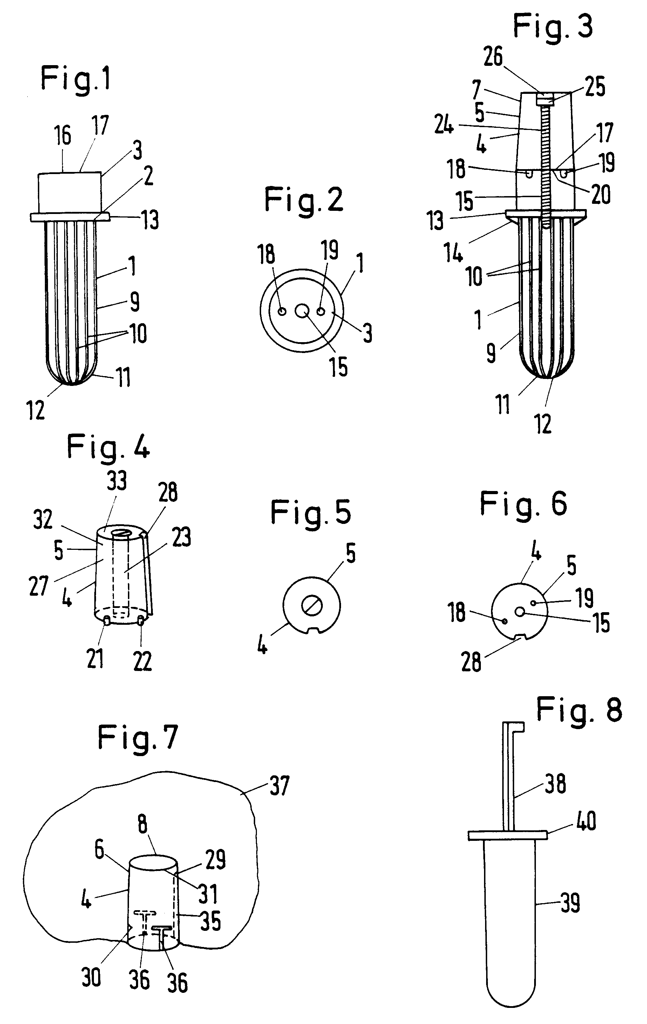

- Fig. 1 :: Ein Implantat in Seitenansicht,
- Fig. 2 :: eine Draufsicht auf ein Implantat gemäß Figur 1,
- Fig. 3 :: ein Implantat in Seitenansicht gemäß Figur 1 mit einer daran befestigten Primärkrone,
- Fig. 4 :: eine Primärkrone in perspektivischer Darstellung in Seitenansicht,
- Fig. 5 :: eine Draufsicht auf eine Primärkrone gemäß Figur 4,
- Fig. 6 :: eine Druntersicht unter eine Primärkrone gemäß Figur 4,
- Fig. 7 :: eine Sekundärkrone in Seitenansicht,
- Fig. 8 :: einen Stirnbohrer zur Herstellung einer für ein Implantat gemäß Figur 1 erforderlichen Bohrkavität,

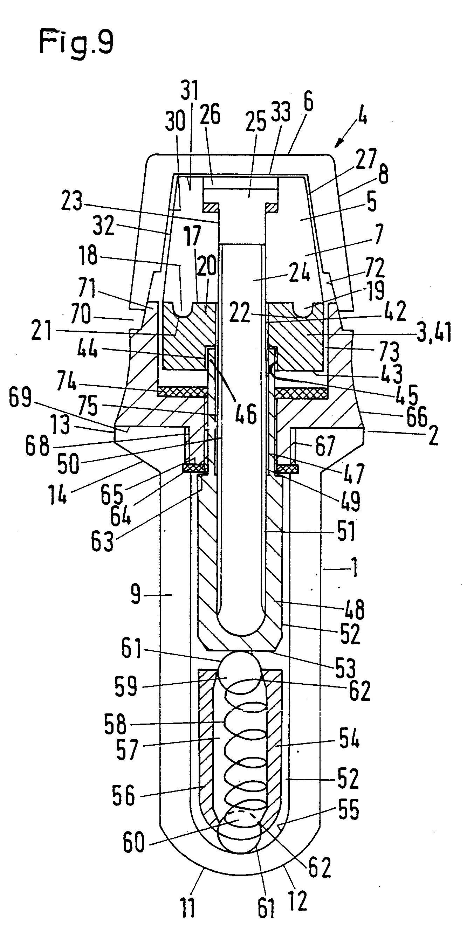

- Fig. 9 :: einen Längsschnitt durch eine weitere Ausführungsform eines Implantates mit daran befestigten Primär- und Sekundärkronen.

Die Vorrichtung zur Befestigung eines Zahnersatzes besteht im wesentlichen aus einem Implantat 1, das an seinem dem Kiefer abgewandten Ende 2 mit einem Kronenträger 3 versehen ist, an dem eine Krone 4 angeordnet ist, die aus zwei Teilen 5, 6 besteht, von denen einer als Primärkrone 7 und der andere als Sekundärkrone 8 ausgebildet ist. Das Implantat 1 besteht im wesentlichen aus einem zylindrisch bis leicht konisch geformten Verankerungsteil 9, das mit in seinen Längsrichtungen verlaufenden Riefen 10 versehen ist. Die Riefen 10 sind radial im wesentlichen gleichmäßig über das Verankerungsteil 9 verteilt. Die Riefen 10 sind vorzugsweise gegenüber der übrigen Oberfläche des Verankerungsteils 9 etwa 0,2 Millimeter tief, wobei das Verankerungsteil 9 einen Gesamtdurchmesser von 2,5 bis 3,8 mm aufweist.

Das Verankerungsteil 9 ist an seinem in einen Kieferknochen hineinragenden Ende 11 mit einer Abrundung 12 versehen. Der Verankerungsteil 9 ist an seiner der Abrundung 12 abgewandten Seite mit einem ihn radial umgebenden Ringflansch 13 versehen. Dieser ist an seiner dem Verankerungsteil 9 zugekehrten Unterseite 14 konisch ausgebildet. An seiner der Unterseite 14 abgewandten Oberseite des Ringflansches 13 ist der Kronenträger 3 angeordnet, der im wesentlichen zylindrisch ausgebildet ist. Der Kronenträger 3 ist vorzugsweise hochglanzpoliert und mit einer Gewindebohrung 15 versehen, die ihn im Bereich seiner Längsachse durchdringt. Die Gewindebohrung 15 ragt in das Verankerungsteil 9 hinein.

Der Kronenträger 3 weist an seiner dem Ringflansch 13 abgewandten Seite 16 eine die Primärkrone 7 abstützende Stützfläche 17 auf. Er ist im Bereich der Stützfläche 17 mit zwei Sacklöchern 18, 19 versehen, die benachbart der Gewindebohrung 15 angeordnet sind. An dem Kronenträger 3 ist die Primärkrone 7 befestigt. Diese weist eine der Stützfläche 17 angepaßte Auflagerfläche 20 auf. In einer der Auflagerfläche abgewandten Richtung verjüngt sich die Primärkrone 7 geringfügig konisch. An der Auflagerfläche 20 der Primärkrone 7 sind Führungsstifte 21, 22 vorgesehen, die formschlüssig in die Sacklöcher 18, 19 des Kronenträgers 3 hineinragen. Die Primärkrone 7 ist mit einer auf die Gewindebohrung 15 des Kronenträgers 3 ausgerichteten Bohrung 23 versehen, durch die eine die Primärkrone 7 mit dem Kronenträger 3 verspannende Spannschraube 24 hindurchragt. Die Spannschraube 24 ist mit einem Kopf 25 versehen, der in einer Versenkung 26 der Primärkrone 7 angeordnet ist. Unter dem Kopf 25 ist ein Federring vorgesehen, der die Spannschraube 24 gegen unbeabsichtigtes Lösen sichert.

Die Primärkrone 7 ist im Bereich ihrer Mantelfläche 27 mit einer Führungsnut 28 versehen, die im wesentlichen in gleichen Richtungen wie die Spannschraube 24 verläuft.

Die Sekundärkrone 8 ist im wesentlichen als eine die Primärkrone 7 umschließende Haube 29 ausgebildet. Ihre Innenflächen 30, 31 sind den Außenflächen 32, 33 der Primärkrone 7 im Sinne einer Haftreibung angepaßt.

Die Sekundärkrone 8 ist im Bereich ihrer konisch verlaufenden Innenmantelfläche 30 mit einem Führungssteg 35 versehen, der der Führungsnut 28 der Primärkrone 7 angepaßt ist und dieser parallel verläuft. Der Führungssteg 35 und die Führungsnut 28 sind als Geschiebe im Sinne einer gleitenden, die Sekundärkrone 8 in einer definierten Lage zur Primärkrone 7 festlegenden Lagerung ausgebildet. Die Sekundärkrone 8 ist im Bereich ihrer dem Ringflansch 13 zugekehrten Öffnung mit Retentionskerben 36 versehen, an denen ein mit der Sekundärkrone 8 verbundener Zahnersatz 37 befestigt ist. Der Führungssteg 35 ist aktivierbar im Sinne einer Erweiterung oder Verengung, um die Haftreibung der Sekundärkrone 8 gegenüber der Primärkrone 7 zu verändern.

Zur Herstellung einer Implantationskavität ist ein Stirnbohrer 38 vorgesehen, dessen Bohrkrone 39 der Form und den Abmessungen des Verankerungsteiles 9 angepaßt ist. Der Stirnbohrer 38 ist mit einem Frästeller 40 versehen, dessen Abmessungen dem Ringflansch 13 angepaßt sind.

Die erfindungsgemäße Vorrichtung wird wie folgt eingesetzt:
Nachdem mit Hilfe des Stirnbohrers 38 unter Verwendung der Bohrvorrichtung für kieferchirurgische Implantatkavitäten gemäß der deutschen Patentanmeldung P 38 32 823.9 eine von mehreren präzise einander parallel verlaufenden Implantatkavitäten im Kieferknochen eines Patienten gebohrt worden ist und der Frästeller 40 eine Eisenkung in die Compacta geschaffen hat, wird das Implantat 1 mit seinem Verankerungsteil 9 in die Bohrkavität eingesenkt. Etwa dort noch vorhandene Luft- und Blutreste werden durch die Riefen 10 des Verankerungsteils 9 nach außen abgeführt. Der Ringflansch 13 senkt sich in die von dem Frästeller 40 des Stirnbohrers 38 geschaffene Einsenkung und bildet dort ein Knochenschlußteil aus. Damit kann die Bohrkavität mit dem darin eingesetzten Verankerungsteil 9 des Implantetes 1 zuverlässig nach außen abgeschlossen und etwaige Infektionen verhindert werden.

Nach dem Einheilen des Implantates 1 in den Kieferknochen hat sich das Zahnfleisch mit seiner Schleimhaut über den Ringflansch 13 geschoben und das Implantat 1 vollständig gegen die Außenwelt abgeschlossen.

Nach dem Einheilen des Implantates 1 wird auf den Kronenträger 3 die Primärkrone 7 aufgeschraubt. Dabei wird die Primärkrone 7 mit ihrer Auflagerfläche 20 auf die Stützfläche 17 des Kronenträgers 3 aufgebracht und die Führungsstifte 21, 22 der Primärkrone 7 in die Sacklöcher 18, 19 des Kronenträgers 3 eingesenkt. Durch die Bohrung 23 wird die Spannschraube 24 mit samt dem Federring in die Gewindebohrung 15 des Kronenträgers 3 und des Verankerungsteiles 9 hineingeschraubt, bis der Kopf 25 der Spannschraube 24 vollständig in der Versenkung 26 festgespannt ist. Durch die in den Sacklöchern 18, 19 ruhenden Führungsstifte 21, 22 der Primärkrone 7 in Verbindung mit der Spannschraube 24 ist die Primärkrone 7 absolut sicher gegen Verdrehen gegenüber dem Kronenträger 3 gesichert, so daß durch die Kaubewegungen des Patienten die Spannschraube 24 nicht gelöst werden kann.

Nachdem die Primärkrone 7 am Kronenträger 3 befestigt ist, wird die Sekundärkrone 8 mit dem an ihr befestigten Zahnersatz 37, wie beispielsweise eine Brücke oder ähnlichem aufgeschoben. Dabei kommen die Innenflächen 30, 31 der Sekundärkrone 8 in engen Kontakt mit den Außenflächen 32, 33 der Primärkrone, so daß zwischen ihnen eine Haftreibung entsteht. Beim Aufschieben der Sekundärkrone 8 auf die Primärkrone 7 wird in der Führungsnut 28 der Primärkrone 7 der an dem Innenmantel 34 der Sekundärkrone 8 vorgesehene Führungssteg 35 im Sinne einer definierten Festlegung der Sekundärkrone 8 auf der Primärkrone 7 geführt. Hierdurch kann eine präzise und auch nach vielfältigem Abnehmen und Wiederaufsetzen der Sekundärkrone 8 auf die Primärkrone 7 ein unverändert festsitzender Zahnersatz gewährleistet werden. Dies gilt insbesondere dann, wenn mehrere Implantate 1 unter Verwendung der Bohrvorrichtung für kieferchirurgische Implantatkavitäten nach der deutschen Patentanmeldung P 38 02 789.5 am Kiefer des Patienten befestigt worden sind.

Der Kronenträger ist federnd mit dem Implantat verbunden. Besonders vorteilhaft ist, eine Vorrichtung so auszubilden, daß der Kronenträger 3, 41 im Abstand zum Ringflansch 13 angeordnet ist. Der Kronenträger 3, 41 besteht aus einem im wesentlichen zylindrisch geformten Körper, der in seiner Mittelachse mit einer die Spannschraube 24 aufnehmenden Bohrung 42 versehen ist. Er ist an seiner dem Implantat 1 zugekehrten Unterseite 43 mit einer die Spannschraube 24 radial umgebenden Ausnehmung 44 versehen, die den Kronenträger 3, 41 teilweise durchdringt und die mit einem Innengewinde 45 versehen ist, in das ein Außengewinde 46 eines Schaftes 47 eingeschraubt ist, der Teil eines Implantatbolzens 48 darstellt.

Dieser und der Schaft 47 sind im wesentlichen zylindrisch geformt, wobei der Durchmesser des Schaftes 47 geringer ist als derjenige des Implantatbolzens 48. Der Schaft 47 ist mit einer ihn in seiner Längsrichtung durchdringenden Bohrung 49 versehen, die die Spannschraube durch ein Innengewinde 50 aufnimmt. Der Implantatbolzen 48 ist mit einer Gewindebohrung 51 versehen, die ihn in Verlängerung der Bohrung 49 teilweise durchdringt und in die Spannschraube 24 hineinragt. Der Implantatbolzen 48 ist drehfest und in seiner Längsrichtung verschieblich in einem Bewegungsraum 52 gelagert, der den Verankerungsteil 9 in seiner Längsrichtung zentral bis nahe seiner Abrundung 12 durchdringt. Der Implantatbolzen 48 ist mit seinem seinem Schaft 47 abgewandten Ende 53 einem Resilianzkörper 54 zugekehrt, der innerhalb des Bewegungsraumes 52 gleitend gelagert ist und der sich spannend zwischen dem Implantatbolzen 48 und einem den Bewegungsraum 52 begrenzenden Boden 55 des Verankerungsteils 9 erstreckt. Der Resilianzkörper 54 besteht aus einer Hülse 56, die in ihren äußeren Abmessung im wesentlichen dem sie umgebenden Bewegungsraum 52 angepaßt ist und die einen im wesentlichen zylindrischen Innenraum 57 aufweist, in dem eine Druckfeder 58 vorgesehen ist, die sich zwischen zwei Kugeln 59, 60 spannt, die die Hülse 56 in ihren Längsrichtungen jeweils mit einem Teil ihrer Oberflächen 61 überragen. Die Kugeln 59, 60 sind in Querschnittsverengungen 62 der Hülse 56 gehaltert, die den Innenraum 57 verengen.

Der Implantatbolzen 48 ist mit seinem dem Schaft 47 zugewandten Bereich mit einem ihn ringförmig umgebenden Anschlagflansch 63 versehen. Dieser ist auf eine Gummischeibe 64 ausgerichtet, die an einer Widerlagerfläche 65 einer Implantatdistanzschraube 66 angeordnet ist. Diese Implantatdistanzschraube 66 weist einen der Widerlagerfläche 65 benachbarten Gewindeteil 67 auf, der in ein Innengewinde 68 hineinragt, das im Verankerungsteil 9 im Bereich des Ringflansches 13 vorgesehen ist. Die Implantatdistanzschraube 66 besitzt eine Abstützfläche 69, die dem Ringflansch 13 zugewandt ist und diesen beaufschlagt. Die Implantatdistanzschraube 66 besitzt eine Außenfläche 67, die sich in denjenigen Richtungen im wesentlichen konisch verjüngt, die dem Ringflansch 13 abgewandt sind. Die Außenfläche 67 der Implantatdistanzschraube 66 ist an ihrem dem Ringflansch 13 abgewandten Ende mit einer ringförmigen Ausnehmung 70 versehen, die einem radial verlaufenden Kragen 71 benachbart ist. Der Kragen 71 ist an eine Ringnut 72 der Sekundärkrone 8 angepaßt, wobei die Maßlichkeiten so aufeinander abgestimmt sind, daß der Kragen 71 abdichtend und gleitend in der Ringnut 72 gelagert ist. Die Implantatdistanzschraube 66 ist mit einer sie zentral teilweise durchdringenden Einsenkung 73 versehen, die im Sinne einer gleitenden Lagerung den Abmessungen des Kronenträgers 3, 41 angepaßt ist und an deren dem Ringflansch 13 planparallel verlaufenden Bodenfläche eine der Unterseite 43 des Kronenträgers 3, 41 zugekehrte ringförmige Federgummischeibe 74 vorgesehen ist.

Die Implantatdistanzschraube 66 ist ferner mit einer zentralen Bohrung 75 versehen, in der der Schaft 47 des Implantatbolzens 48 schiebebeweglich gelagert ist.

Diese Ausführungsform der Vorrichtung wird wie folgt montiert:
Nachdem zunächst wie bei der erstbeschriebenen Vorrichtung der Verankerungsteil in eine zuvor präparierte Bohrkavität eingesetzt worden ist, wird bis zum Einheilen des Verankerungsteiles 9 der Bewegungsraum 52, der zunächst noch leer ist, verschlossen, indem in das Innengewinde 68, das später den Gewindeteil 67 der Implantatdistanzschraube 66 aufnimmt, eine den Bewegungsraum 52 verschließende Schraube eingesetzt und das Zahnfleisch vernäht wird.

Nachdem der Verankerungsteil 9 eingeheilt ist, wird zur Befestigung der Krone 4 zunächst wieder der Ringflansch 13 freigelegt und die den Bewegungsraum 52 verschließende Schraube entfernt.

Alsdann wird in den Bewegungsraum 52 der Resilianzkörper 54 eingeschoben. Danach wird der Implantatbolzen 48 mit seinem Schaft 47 durch die zentrale Bohrung 75 der Implantatdistanzschraube 66 durchgeschoben und das Außengewinde 46 des Schaftes 47 in das Innengewinde 45 eingeschraubt, das in der Ausnehmung 44 an der Unterseite 43 des Kronenträgers 41 vorgesehen ist und fest mit Kronenträger 41 verbunden. Alsdann wird der Implantatbolzen 48 in den Bewegungsraum 52 hineingeschoben und die Implantatdistanzschraube 66 in das Innengewinde 68 des Verankerungsteils 9 eingeschraubt. Die Abmessungen des Implantatbolzens 48 sind dabei so definiert, daß er sich federnd auf dem Resilianzkörper abstützt und mit einem vorher definierten Druck mit dem Anschlagflansch 63 des Implantatbolzens 48 gegen die Gummischeibe 64 drückt.

Nach dieser Vorbereitung wird die Primärkrone 7 mit Hilfe der Spannschraube 24 an dem Kronenträger 3, 41 befestigt, indem die zuvor mit Vaseline versehene Spannschraube 24 durch den Kronenträger 3, 41 und das im Schaft 47 vorgesehene Gewinde 50 hindurch bis in den Implantatbolzen 48 hineingeschraubt wird und die Primärkrone 7 an dem Kronenträger 41 festlegt. Nachdem die Sekundärkrone 8 verbunden mit dem Zahnersatz 37 auf die Primärkrone 7 aufgesetzt ist, entsteht neben dem Kragen 71 im Bereich der Ringnut 72 der Sekundärkrone ein Resilianzabstand, der eine federnde Verbindung zwischen der Krone 4 und dem Implantat 1 ermöglicht. Bei einer Druckbelastung auf den Zahnersatz kann dieser gegenüber dem Resilianzkörper 54 einfedern, bis die Unterseite 43 des Kronenträgers 3, 41 sich auf der Federgummischeibe 74 abstützt. Bei Druckentlastung geht die Bewegung in die entgegengesetzte Richtung, bis sich der Anschlagflansch 63 des Implantatbolzens 48 gegen die Gummischeibe 64 legt. Durch die Verwendung der Gummischeibe 64 und der Federgummischeibe 74 werden die Bewegungen an ihren jeweiligen Umkehrpunkten gedämpft, und die Belastungen des Implantates weiter verringert.

## Patentansprüche

1. Vorrichtung zur Befestigung eines Zahnersatzes an einem menschlichen Kiefer mit einem in den Kiefer zu implantierenden Implantat (1) und einer den Zahnersatz tragenden Krone (7,8), wobei das Implantat an seiner dem Kiefer abgewandten Ende mit einem Kronenträger (3) versehen ist und die daran angeordnete Krone aus zwei Teilen besteht, von denen einer als Primärkrone (7) an dem Kronenträger (3) befestigt ist und der andere Teil als Sekundärkrone (8) an der Primärkrone in definierter Lage festgelegt ist, dadurch gekennzeichnet, daß der Kronenträger (3, 41) federnd mit dem Implantat (1) verbunden ist.

2. Vorrichtung nach Anspruch 1, dadurch gekennzeichnet, daß das Implantat (1) im wesentlichen aus einem zylindrisch bis leicht konisch geformten Verankerungsteil (9) besteht, das mit in seinen Längsrichtungen verlaufenden Riefen (10) versehen ist.

3. Vorrichtung nach Anspruch 1 und 2, dadurch gekennzeichnet, daß die Riefen (10) im wesentlichen radial gleichmäßig um den Verankerungsteil (9) verteilt sind.

4. Vorrichtung nach Anspruch 1 bis 3, dadurch gekennzeichnet, daß die Riefen (10) ca. 0,2 mm tief sind.

5. Vorrichtung nach Anspruch 1 bis 4, dadurch gekennzeichnet, daß der Verankerungsteil (9) an seinem in einen Kieferknochen hineinragenden Ende (11) mit einer Abrundung (12) versehen ist.

6. Vorrichtung nach Anspruch 1 bis 5, dadurch gekennzeichnet, daß der Verankerungsteil (9) an seiner der Abrundung (12) abgewandten Seite mit einem ihn radial umgebenden Ringflansch (13) versehen ist.

7. Vorrichtung nach Anspruch 1 bis 6, dadurch gekennzeichnet, daß der Ringflansch (13) an seiner dem Verankerungsteil (9) zugekehrten Unterseite (14) konisch verläuft.

8. Vorrichtung nach Anspruch 1 bis 7, dadurch gekennzeichnet, daß an einer der Unterseite (14) abgewandten Oberseite des Ringflansches (13) der Kronenträger (3) angeordnet ist, der im wesentlichen zylindrisch ausgebildet ist.

9. Vorrichtung nach Anspruch 1 bis 8, dadurch gekennzeichnet, daß der Kronenträger (3) hochglanzpoliert und mit einer Gewindebohrung (15) versehen ist, die ihn im Bereich seiner Längsachse durchdringt.

10. Vorrichtung nach Anspruch 1 bis 9, dadurch gekennzeichnet, daß die Gewindebohrung (15) in den Verankerungsteil (9) hineinragt.

11. Vorrichtung nach Anspruch 1 bis 10, dadurch gekennzeichnet, daß der Kronenträger (3) an seiner dem Ringflansch (13) abgewandten Seite (16) eine die Primärkrone (7) abstützende Stützfläche (17) aufweist.

12. Vorrichtung nach Anspruch 1 bis 11, dadurch gekennzeichnet, daß der Kronenträger (3) im Bereich seiner Stützfläche (17) zwei Sacklöcher (18, 19) aufweist, die benachbart der Gewindebohrung (15) angeordnet sind.

13. Vorrichtung nach Anspruch 1 bis 12, dadurch gekennzeichnet, daß die Primärkrone (7) eine der Stützfläche (17) angepaßte Auflagerfläche (20) aufweist und in einer dieser abgewandten Richtung geringfügig konisch verjüngt ausgebildet ist.

14. Vorrichtung nach Anspruch 1 bis 13, dadurch gekennzeichnet, daß an der Auflagerfläche (20) der Primärkrone (7) Führungsstifte (21, 22) vorgesehen sind, die formschlüssig in die Sacklöcher (18, 19) des Kronenträgers (3) hineinragen.

15. Vorrichtung nach Anspruch 1 bis 14, dadurch gekennzeichnet, daß die Primärkrone (7) mit einer auf die Gewindebohrung (15) des Kronenträgers (3) ausgerichteten Bohrung (23) versehen ist, durch die eine die Primärkrone (7) mit dem Kronenträger (3) verspannende Spannschraube (24) hindurchragt.

16. Vorrichtung nach Anspruch 1 bis 15, dadurch gekennzeichnet, daß die Spannschraube (24) mit einem Kopf (25) versehen ist, der in einer Versenkung (26) der Primärkrone (7) angeordnet ist.

17. Vorrichtung nach Anspruch 1 bis 16, dadurch gekennzeichnet, daß die Primärkrone (7) im Bereich ihrer Mantelfläche (27) mit einer Führungsnut (28) versehen ist, die im wesentlichen in gleichen Richtungen wie die Spannschraube (24) verläuft.

18. Vorrichtung nach Anspruch 1 bis 17, dadurch gekennzeichnet, daß die Sekundärkrone (8) als eine die Primärkrone (7) umschließende Haube (29) ausgebildet ist, deren Innenflächen (30, 31) den Außenflächen (32, 33) der Primärkrone (7) angepaßt sind.

19. Vorrichtung nach Anspruch 1 bis 18, dadurch gekennzeichnet, daß die Innenflächen (30, 31) der Sekundärkrone (8) den Außenflächen (32, 33) der Primärkrone (7) im Sinne einer Haftreibung angepaßt sind.

20. Vorrichtung nach Anspruch 1 bis 19, dadurch gekennzeichnet, daß die Sekundärkrone (8) im Bereich einer konisch verlaufenden Innenfläche (34) einen Führungssteg (35) aufweist, der der Führungsnut (28) der Primärkrone (7) angepaßt ist und dieser parallel verläuft.

21. Vorrichtung nach Anspruch 1 bis 20, dadurch gekennzeichnet, daß der Führungssteg (35) und die Führungsnut (28) als Geschiebe im Sinne einer gleitenden, die Sekundärkrone (8) in einer definierten Lage zur Primärkrone (7) festlegenden Lagerung ausgebildet sind.

22. Vorrichtung nach Anspruch 1 bis 21, dadurch gekennzeichnet, daß der Führungssteg (35) im Sinne einer Veränderung der Haftreibung der Sekundärkrone (8) gegenüber der Primärkrone (7) aktivierbar ausgebildet ist.

23. Vorrichtung nach Anspruch 1 bis 22, dadurch gekennzeichnet, daß die Sekundärkrone (8) an ihren der Primärkrone (7) abgewandten Außenflächen mit dem Zahnersatz (37), wie zum Beispiel einem künstlichen Zahn, einer Brücke o.ä. verbunden ist.

24. Vorrichtung nach Anspruch 1 bis 23, dadurch gekennzeichnet, daß der Zahnersatz (37) an Retentionskerben (36) befestigt ist.

25. Vorrichtung nach Anspruch 1 bis 7, 9, 11 bis 24, dadurch gekennzeichnet, daß der Kronenträger (3, 41) im Abstand zum Ringflansch (13) angeordnet ist.

26. Vorrichtung nach Anspruch 1 bis 7, 9, 11 bis 25, dadurch gekennzeichnet, daß der Kronenträger (3, 41) aus einem im wesentlichen zylindrisch geformten Körper besteht, der in seiner Mittelachse mit einer die Spannschraube (24) aufnehmenden Bohrung (42) versehen ist.

27. Vorrichtung nach Anspruch 1 bis 7, 9, 11 bis 26, dadurch gekennzeichnet, daß der Kronenträger (3, 41) an seiner dem Implantat (1) zugekehrten Unterseite (43) eine die Spannschraube (24) radial umgebende Ausnehmung (44) aufweist, die den kronenträger (3, 41) teilweise durchdringt und die mit einem Innengewinde (45) versehen ist, in das ein Außengewinde (46) eines Schaftes (47) eines Implantatbolzens (48) eingeschraubt ist.

28. Vorrichtung nach Anspruch 1 bis 7, 9, 11 bis 27, dadurch gekennzeichnet, daß der Implantatbolzen (48) und sein Schaft (47) einstückig ausgebildet und im wesentlichen zylindrisch geformt sind, wobei der Durchmesser des Schaftes (47) geringer ist als derjenige des Implantatbolzens (48).

29. Vorrichtung nach Anspruch 1 bis 7, 9, 11 bis 28, dadurch gekennzeichnet, daß der Schaft (47) mit einer ihn in seiner Längsrichtung durchdringenden Bohrung (49) versehen ist, die ein Gewinde (50) aufweist und der Implantatbolzen (48) mit einer ihn teilweise durchdringenden Gewindebohrung (51) ausgestattet ist und die Spannschraube (24) durch das Gewinde (50) in die Gewindebohrung (51) hineinragt.

30. Vorrichtung nach Anspruch 1 bis 7, 9, 11 bis 29, dadurch gekennzeichnet, daß der Implantatbolzen (48) drehfest und in seiner Längsrichtung verschieblich in einem Bewegungsraum (52) gelagert ist, der den Verankerungsteil (9) in seiner Längsrichtung zentral bis nahe seiner Abrundung (12) durchdringt.

31. Vorrichtung nach Anspruch 1 bis 7, 9, 11 bis 30, dadurch gekennzeichnet, daß der Implantatbolzen (48) mit seinem seinem Schaft (47) abgewandten Ende (53) einem Resilianzkörper (54) zugekehrt ist, der innerhalb des Bewegungsraumes (52) gleitend gelagert ist und der sich spannend zwischen dem Implantatbolzen (48) und einem den Bewegungsraum (52) begrenzenden Boden (55) des Verankerungsteils (9) erstreckt.

32. Vorrichtung nach Anspruch 1 bis 7, 9, 11 bis 31, dadurch gekennzeichnet, daß der Resilianzkörper (54) aus einer in ihren äußeren Abmessungen im wesentlichen dem sie umgebenden Bewegungsraum (52) angepaßten Hülse 56 besteht, die einen im wesentlichen zylindrischen Innenraum (57) aufweist, in dem eine Druckfeder (58) vorgesehen ist, die sich zwischen zwei Kugeln (59, 60) spannt, die die Hülse (56) in ihrer Längsrichtung jeweils mit einem Teil ihrer Oberflächen (61) überragen.

33. Vorrichtung nach Anspruch 1 bis 7, 9, 11 bis 32, dadurch gekennzeichnet, daß die Kugeln (59, 60) in Querschnittverengungen (62) der Hülse (56) gehaltert sind, die den Innenraum (57) verengen.

34. Vorrichtung nach Anspruch 1 bis 7, 9, 11 bis 33, dadurch gekennzeichnet, daß der Implantatbolzen (48) in seinen dem Schaft (47) zugewandten Bereich einen ihn ringförmig umgebenden Anschlagflansch (63) ausbildet.

35. Vorrichtung nach Anspruch 1 bis 7, 9, 11 bis 34, dadurch gekennzeichnet, daß der Anschlagflansch (63) auf eine Gummischeibe (64) ausgerichtet ist, die an einer Widerlagerfläche (65) einer Implantatdistanzschraube (66) angeordnet ist.

36. Vorrichtung nach Anspruch 1 bis 7, 9, 11 bis 35, dadurch gekennzeichnet, daß die Implantatdistanzschraube (66) einen der Widerlagerfläche (65) benachbarten Gewindeteil (67) aufweist, der in ein Innengewinde (68) hineinragt, das im Verankerungsteil (9) im Bereich des Ringflansches (13) vorgesehen ist.

37. Vorrichtung nach Anspruch 1 bis 7, 9, 11 bis 36, dadurch gekennzeichnet, daß die Implantatdistanzschraube (66) eine Abstützfläche (69) aufweist, die dem Ringflansch (13) zugewandt ist und diesen beaufschlagt.

38. Vorrichtung nach Anspruch 1 bis 7, 9, 11 bis 37, dadurch gekennzeichnet, daß die Implantatdistanzschraube (66) eine Außenfläche (67) aufweist, die sich in dem Ringflansch (13) abgewandten Richtungen im wesentlichen konisch verjüngt.

39. Vorrichtung nach Anspruch 1 bis 7, 9, 11 bis 38, dadurch gekennzeichnet, daß die Außenfläche (67) der Implantatdistanzschraube (66) in ihrem den Ringflansch (13) abgewandten Ende eine ringförmige Ausnehmung (70) aufweist, die einen radial verlaufenden Kragen (71) benachbart ist.

40. Vorrichtung nach Anspruch 1 bis 7, 9, 11 bis 39, dadurch gekennzeichnet, daß der Kragen (71) an eine Ringnut (72) in der Sekundärkrone (8) in deren dem Kragen (71) zugewandten Bereich im Sinne einer gleitenden Lagerung angepaßt ist.

41. Vorrichtung nach Anspruch 1 bis 7, 9, 11 bis 40, dadurch gekennzeichnet, daß die Implantatdistanzschraube (66) eine sie zentral teilweise durchdringende Einsenkung (73) aufweist, die im Sinne einer gleitenden Lagerung den Abmessungen des Kronenträgers (3, 41) angepaßt ist und an deren dem Ringflansch (13) planparallel verlaufender Bodenfläche eine der Unterseite (43) zugekehrte ringförmige Federgummischeibe (74) vorgesehen ist.

42. Vorrichtung nach Anspruch 1 bis 7, 9, 11 bis 41, dadurch gekennzeichnet, daß die Implantatdistanzschraube (66) eine zentrale Bohrung (75) aufweist, in der der Schaft (47) des Implantatbolzens (48) schiebebeweglich gelagert ist.

43. Vorrichtung nach Anspruch 1 bis 42, dadurch gekennzeichnet, daß ein Stirnbohrer (38) vorgesehen ist, dessen Abmessungen dem Verankerungsteil (9) und dem Ringflansch (13) angepaßt sind.

44. Vorrichtung nach Anspruch 43, dadurch gekennzeichnet, daß der Stirnbohrer (38) eine Bohrkrone 39 aufweist, deren Form und Abmessungen dem Verankerungsteil angepaßt sind.

45. Vorrichtung nach Anspruch 43 und 44, dadurch gekennzeichnet, daß der Stirnbohrer (38) einen Frästeller (40) aufweist, dessen Form und Abmessungen dem Ringflansch (13) entsprechen.

## Claims

1. A device for fixing a dental prosthesis to a human jawbone with an implant (1) to be implanted in the jawbone and a crown (7, 8) supporting the dental prosthesis, wherein the implant is provided at its end remote from the jawbone with a crown support (3) and the crown disposed thereon consists of two parts, one of which is fixed as a primary crown (7) to the crown support (3) and the other of which is fixed to the primary crown in a defined position as a secondary crown (8) , characterised in that the crown support (3, 41) is resiliently attached to the implant (1).

2. A device according to claim 1, characterised in that the implant (1) substantially consists of an anchoring part (9) of cylindrical to slightly tapered shape, which is provided with furrows (10) running in its longitudinal directions.

3. A device according to claim 1 and 2, characterised in that the furrows (10) are distributed substantially radially around the anchoring part (9).

4. A device according to claims 1 to 3, characterised in that the furrows (10) are about 0.2 mm deep.

5. A device according to claims 1 to 4, characterised in that the anchoring part (9) is provided with a rounded-off portion (12) at its end (11) which projects into a jawbone.

6. A device according to claims 1 to 5, characterised in that the anchoring part (9) is provided with an annular flange (13) radially surrounding it on its side remote from the rounded-off portion (12).

7. A device according to claims 1 to 6, characterised in that the annular flange (13) extends conically on its lower face (14) facing the anchoring part (9).

8. A device according to claims 1 to 7, characterised in that the crown support (3), which is of substantially cylindrical construction, is disposed on an upper face of the annular flange (13) facing away from the lower face (14).

9. A device according to claims 1 to 8, characterised in that the crown support (3) is polished to a mirror finish and is provided with a tapped hole (15) which penetrates it in the region of its longitudinal axis.

10. A device according to claims 1 to 9, characterised in that the tapped hole (15) projects into the anchoring part (9).

11. A device according to claims 1 to 10, characterised in that the crown support (3) has a supporting surface (17), which supports the primary crown (7), on its face (16) remote from the annular flange (13).

12. A device according to claims 1 to 11, characterised in that the crown support (3) has two blind holes (18, 19), which are disposed adjacent to the tapped hole (15), in the region of its supporting surface (17).

13. A device according to claims 1 to 12, characterised in that the primary crown (7) has a bearing surface (20) matched to the supporting surface (17) and is constructed with a slight conical taper in the direction pointing away from the bearing surface.

14. A device according to claims 1 to 13, characterised in that guide pins (21, 22) are provided on the bearing surface (20) of the primary crown (7), which guide pins project with a positive fit into the blind holes (18, 19) of the crown support (3).

15. A device according to claims 1 to 14, characterised in that the primary crown (7) is provided with a bore (23) directed towards the tapped hole (15) of the crown support (3), through which bore a bracing screw (24) projects which braces the primary crown (7) against the crown support (3).

16. A device according to claims 1 to 15, characterised in that the bracing screw (24) is provided with a head (25) which is disposed in an indentation (26) in the primary crown (7).

17. A device according to claims 1 to 16, characterised in that the primary crown (7) is provided with a guide slot (28) in the region of its curved surface (27), which guide slot runs in substantially the same direction as the bracing screw (24).

18. A device according to claims 1 to 17, characterised in that the secondary crown (8) is constructed as a cap (29) surrounding the primary crown (7), the internal surfaces (30, 31) of which cap are matched to the external surfaces (32, 33) of the primary crown (7).

19. A device according to claims 1 to 18, characterised in that the internal surfaces (30, 31) of the secondary crown (8) are matched to the external surfaces (32, 33) of the primary crown (7) in the sense of a frictional bond.

20. A device according to claims 1 to 19, characterised in that the secondary crown (8) has a guide projection (35) in the region of a conically tapering internal surface (34), which guide projection is matched to the guide slot (28) in the primary crown (7) and runs parallel thereto.

21. A device according to claims 1 to 20, characterised in that the guide projection (35) and the guide slot (28) are constructed as a displaceable arrangement in the sense of a sliding mounting which fixes the secondary crown (8) in a defined position in relation to the primary crown (7).

22. A device according to claims 1 to 21, characterised in that the guide projection (35) is constructed so that it can be activated in the sense of an alteration of the frictional bond between the secondary crown (8) and the primary crown (7).

23. A device according to claims 1 to 22, characterised in that the secondary crown (8) is attached to the dental prosthesis (37), such as a false tooth, a bridge or the like, for example, at its external surfaces facing away from the primary crown (7).

24. A device according to claims 1 to 23, characterised in that the dental prosthesis (37) is secured at retaining notches (36).

25. A device according to claims 1 to 7, 9, and 11 to 24, characterised in that the crown support (3, 41) is disposed at a distance from the annular flange (13).

26. A device according to claims 1 to 7, 9, and 11 to 25, characterised in that the crown support (3, 41) consists of a body of substantially cylindrical shape, which is provided on its centre line with a hole (42) to receive the bracing screw (24).

27. A device according to claims 1 to 7, 9, and 11 to 26, characterised in that the crown support (3, 41) has a recess (44), which radially surrounds the bracing screw (24), on its lower face (43) which faces the implant (1), which recess partially penetrates the crown support (3, 41) and is provided with an internal thread (45) into which an external thread (46) of a stem (47) of an implant stud (48) is screwed.

28. A device according to claims 1 to 7, 9, and 11 to 27, characterised in that the implant stud (48) and its stem (47) are constructed in one piece and are substantially cylindrical in shape, wherein the diameter of the stem (47) is less than that of the implant stud (48).

29. A device according to claims 1 to 7, 9, and 11 to 28, characterised in that the stem (47) is provided with a bore (49) which penetrates it in its longitudinal direction, which bore has a thread (50), and the implant stud (48) is equipped with a tapped hole (51) which partially penetrates it, and the bracing screw (24) projects through the thread (50) into the tapped hole (51).

30. A device according to claims 1 to 7, 9, and 11 to 29, characterised in that the implant stud (48) is mounted rotationally fixed and displaceable in its longitudinal direction in a motional space (52) which penetrates the anchoring part (9) centrally in the latter's longitudinal direction up to the vicinity of its rounded-off portion (12).

31. A device according to claims 1 to 7, 9, and 11 to 30, characterised in that the end (53) of the implant stud (48) remote from its stem (47) faces a resilient body (54) which is mounted so that it can slide inside the motional space (52) and which extends in a self-clamping manner between the implant stud (48) and a base (55) of the anchoring part (9) which delimits the motional space (52).

32. A device according to claims 1 to 7, 9, and 11 to 31, characterised in that the resilient body (54) consists of a sleeve (56), the external dimensions of which are substantially matched to the surrounding motional space (52), and which has a substantially cylindrical internal space (57) in which a compression spring (58) is provided, which is clamped between two spheres (59, 60) which each project in their longitudinal directions from the sleeve (56) by a part of their surfaces (61).

33. A device according to claims 1 to 7, 9, and 11 to 32, characterised in that the spheres (59, 60) are mounted in cross-sectional constrictions (62) of the sleeve (56) which constrict the internal space (57).

34. A device according to claims 1 to 7, 9, and 11 to 33, characterised in that the implant stud (48) forms a stop flange (63) which surrounds it annularly in its region facing the stem (47).

35. A device according to claims 1 to 7, 9, and 11 to 34, characterised in that the stop flange (63) is aligned towards a rubber disc (64) which is disposed on an abutment face (65) of an implant distance screw (66).

36. A device according to claims 1 to 7, 9, and 11 to 35, characterised in that the implant distance screw (66) has a threaded portion (67) adjacent to the abutment face (65), which threaded portion projects into an internal thread (68) which is provided in the anchoring part (9) in the region of the annular flange (13).

37. A device according to claims 1 to 7, 9, and 11 to 36, characterised in that the implant distance screw (66) has a bearing surface (69) which faces the annular flange (13) and which acts upon the latter.

38. A device according to claims 1 to 7, 9, and 11 to 37, characterised in that the implant distance screw (66) has an external surface (67) which tapers substantially conically in directions pointing away from the annular flange (13).

39. A device according to claims 1 to 7, 9, and 11 to 38, characterised in that the external surface (67) of the implant distance screw (66) has an annular recess (70) in its end remote from the annular flange (13), which recess is adjacent to a radially-extending collar (71).

40. A device according to claims 1 to 7, 9, and 11 to 39, characterised in that the collar (71) is matched to an annular channel (72) in the secondary crown (8) in the latter's region facing the collar (71), in the sense of a sliding mounting.

41. A device according to claims 1 to 7, 9, and 11 to 40, characterised in that the implant distance screw (66) has a countersunk region (73) which partially penetrates it centrally, and which is matched to the dimensions of the crown support (3, 41) in the sense of a sliding mounting, and on the basal surface of which, which extends plane-parallel to the annular flange (13), a resilient annular rubber disc (74) is provided facing the lower face (43).

42. A device according to claims 1 to 7, 9, and 11 to 41, characterised in that the implant distance screw (66) has a central bore (75) in which the stem (47) of the implant stud (48) is mounted so that it can execute a sliding movement.

43. A device according to claims 1 to 42, characterised in that a frontal drill (38) is provided, the dimensions of which are matched to the anchoring part (9) and the annular flange (13).

44. A device according to claim 43, characterised in that the frontal drill (38) has a drill bit (39), the shape and dimensions of which are matched to the anchoring part.

45. A device according to claims 43 and 44, characterised in that the frontal drill (38) has a milling disc (40), the shape and dimensions of which are matched to the annular flange (13).

## Revendications

1. Dispositif de fixation d'une prothèse dentaire sur un os maxillaire humain, comprenant un implant (1) à implanter dans l'os maxillaire et une couronne (7, 8) portant la prothèse dentaire, l'implant étant muni à son extrémité détournée de l'os maxillaire, d'un support de couronne (3) et la couronne montée sur ce dernier se composent de deux parties dont l'une est fixée sur le support de couronne (3) en tant que couronne primaire (7) et dont l'autre est immobilisée en tant que couronne secondaire (8) sur la couronne primaire dans une position définie, **caractérisé en ce** que le support de couronne (3, 41) est rattaché élastiquement à l'implant (1).

2. Dispositif selon la revendication 1, caractérisé en ce que l'implant (1) est constitué essentiellement d'un élément d'ancrage (9) de forme cylindrique à légèrement conique muni de cannelures (10) orientées dans le sens de son extension longitudinale.

3. Dispositif selon l'une des revendications 1 et 2, caractérisé on ce que les cannelures (10) sont réparties régulièrement et sensiblement radialement autour de l'élément d'ancrage(9).

4. Dispositif selon l'une des revendications 1 à 3, caractérisé en ce que les cannelures (10) présentent une profondeur d'environ 0,2 mm.

5. Dispositif selon l'une des revendications 1 à 4, caractérisé en ce que l'élément d'ancrage (9) présente un arrondi (12) à son extrémité (11) dépassant dans un os maxillaire.

6. Dispositif selon l'une des revendications 1 à 5, caractérisé en ce que, du côté opposé à l'arrondi (12), l'élément d'ancrage (9) est muni d'une bride annulaire (13) qui l'entoure radialement.

7. Dispositif selon l'une des revendications 1 à 6, caractérisé en ce que la bride annulaire (13) est conique à sa face inférieure (14) tournée vers l'élément d'ancrage (9).

8. Dispositif selon l'une des revendications 1 à 7, caractérisé en ce que sur une face supérieure de la bride annulaire (13) détournée de la face inférieure (14), est disposé le support de couronne (3) de forme sensiblement cylindrique.

9. Dispositif selon l'une des revendications 1 à 8, caractérisé en ce que le support de couronne (3) présente un poli spéculaire et est muni d'un taraudage (15) qui le traverse dans la région de son axe longitudinal.

10. Dispositif selon l'une des revendications 1 à 9, caractérisé en ce que le taraudage (15) dépasse dans l'élément d'ancrage (9).

11. Dispositif selon l'une des revendications 1 à 10, caractérisé on ce que le support de couronne (3) comporte sur sa face (16) détournée de la bride annulaire (13), une surface d'appui (17) qui soutient la couronne primaire (7).

12. Dispositif selon l'une des revendications 1 à 11, caractérisé en ce que le support de couronne (3) présente dans la région de sa surface d'appui (17) deux trous borgnes (18, 19) disposés au voisinage du taraudage (15).

13. Dispositif selon l'une des revendications 1 à 12, caractérisé en ce que la couronne primaire (7) présente une surface d'appui (20) adaptée à la surface d'appui (17) et est légèrement effilée dans une direction opposée à ladite surface d'appui.

14. Dispositif selon l'une des revendications 1 à 13, caractérisé en ce que sur la surface d'appui (20) de la couronne primaire (7) sont prévus des goujons de guidage (21, 22) qui dépassent à engagement positif dans les trous borgnes (18, 19) du support de couronne (3)

15. Dispositif selon l'une des revendications 1 à 14, caractérisé en ce que la couronne primaire (7) comporte un alésage (23) aligné avec le taraudage (15) du support de couronne (3) et traversé par une vis de serrage (24) qui bloque la couronne primaire (7) sur le support de couronne (3).

16. Dispositif selon l'une des revendications 1 à 15, caractérisé en ce que la vis de serrage (24) est munie d'une tête (25) logée dans une noyure (26) de la couronne primaire (7).

17. Dispositif selon l'une des revendications 1 à 16, caractérisé en ce que dans la région de sa surface latérale (27), la couronne primaire (7) est munie d'une gorge de guidage (28) qui s'étend sensiblement dans les mêmes directions que la vis de serrage (24).

18. Dispositif selon l'une des revendications 1 à 17, caractérisé en ce que la couronne secondaire (8) est conformée en chapeau (29) qui entoure la couronne primaire (7) et dont les surfaces intérieures (30, 31) sont adaptées aux surfaces extérieures (32, 33) de la couronne primaire (7).

19. Dispositif selon l'une des revendications 1 à 18, caractérisé en ce que les surfaces intérieures (30, 31) de la couronne secondaire (8) sont adaptées aux surfaces extérieures (32, 33) de la couronne primaire (7) dans le sens d'un frottement par adhérence.

20. Dispositif selon l'une des revendications 1 à 19, caractérisé en ce que, dans la région d'une surface intérieure conique (34), la couronne secondaire (8) présente une nervure de guidage (35) qui est adaptée à la gorge de guidage (28) de la couronne primaire (7) et s'étend parallèlement à ladite gorge de guidage.

21. Dispositif selon l'une des revendications 1 à 20, caractérisé en ce que la nervure de guidage (35) et la gorge de guidage (28) sont réalisées sous la forme d'un charriage dans le sens d'une fixation coulissante qui bloque la couronne secondaire (8) dans une position définie par rapport à la couronne primaire (7).

22. Dispositif selon l'une des revendications 1 à 21, caractérisé en ce que la nervure de guidage (35) est conformée de manière à pouvoir être activée dans le sens d'une variation du frottement par adhérence de la couronne secondaire (8) par rapport à la couronne primaire (7).

23. Dispositif selon l'une des revendications 1 à 22, caractérisé en ce que la couronne secondaire (8) est solidarisée sur ses surfaces extérieures détournées de la couronne primaire (7) avec la prothèse dentaire (37), par exemple une dent artificielle, un bridge ou analogue.

24. Dispositif selon l'une des revendications 1 à 23, caractérisé en ce que la prothèse dentaire (37) est fixée sur des encoches de retenue (36).

25. Dispositif selon l'une des revendications 1 à 7, 9, 11 à 24, caractérisé en ce que le support de couronne (3, 41) est disposé à distance de la bride annulaire (13).

26. Dispositif selon l'une des revendications 1 à 7, 9, 11 à 25, caractérisé en ce que le support de couronne (3, 41) est constitué par un corps de forme sensiblement cylindrique muni d'un alésage central (42) qui reçoit la vis de serrage (24).

27. Dispositif selon l'une des revendications 1 à 7, 9, 11 à 26, caractérisé an ce que le support de couronne (3, 41) présente sur sa face inférieure (43) dirigée vers l'implant (1), un évidement (44) qui entoure radialement la vis de serrage (24), traverse partiellement le support de couronne (3, 41) et est muni d'un filetage intérieur (45) dans lequel est vissé un filet extérieur (46) d'une tige (47) d'un boulon d'implant (48).

28. Dispositif selon l'une des revendications 1 à 7, 9, 11 à 27, caractérisé en ce que le boulon d'implant (48) et sa tige (47) sont d'un seul tenant et de forme sensiblement cylindrique, le diamètre de la tige (47) étant inférieur à celui du boulon d'implant (48).

29. Dispositif selon l'une des revendications 1 à 7, 9, 11 à 28, caractérisé en ce que la tige (47) comporte un alésage (49) qui la traverse dans son extension longitudinale et est muni d'un filetage (50), que le boulon d'implant (48) est pourvu d'un taraudage (51), et que la vis de serrage (24) dépasse au travers du filetage (50) dans le taraudage (51).

30. Dispositif selon l'une des revendications 1 à 7, 9, 11 à 29, caractérisé en ce que le boulon d'implant (48) est fixé de manière rigide en rotation et mobile dans le sens longitudinal dans un espace de mouvement (52) qui traverse l'élément d'ancrage (9) dans le sens longitudinal de celui-ci jusqu'au voisinage de son arrondi (12).

31. Dispositif selon l'une des revendications 1 à 7, 9, 11 à 30, caractérisé en ce que le boulon d'implant (48) est dirigé avec son extrémité (53) détournée de sa tige (47), vers un corps résilient (54) monté de manière coulissante à l'intérieur de l'espace de mouvement (52) et s'étendant dans le sens du blocage entre le boulon d'implant (48) et un fond (55) de l'élément d'ancrage (9) qui délimite l'espace de mouvement (52).

32. Dispositif selon l'une des revendications 1 à 7, 9, 11 à 31, caractérisé en ce que le corps résilient (54) est constitué par une douille (56) dont les dimensions extérieures sont adaptées sensiblement à celles de l'espace de mouvement (52) qui l'entoure, ladite douille présentant un espace intérieur (57) de forme sensiblement cylindrique dans lequel est prévu un ressort de pression (58) qui se tend entre deux billes (59, 60) lesquelles dépassent respectivement avec une partie de leurs surfaces (61) de la douille (56) dans le sens longitudinal de celle-ci.

33. Dispositif selon l'une des revendications 1 à 7, 9, 11 à 32, caractérisé en ce que les billes (59, 60) sont maintenues dans des resserrements (62) de la section transversale de la douille (56) qui rétrécissent l'espace intérieur (57).

34. Dispositif selon l'une des revendications 1 à 7, 9, 11 à 33, caractérisé en ce que le boulon d'implant (48) forme dans sa section dirigée vers la tige (47) une bride d'arrêt (63) qui l'entoure de manière annulaire.

35. Dispositif selon l'une des revendications 1 à 7, 9, 11 à 34, caractérisé en ce que la bride d'arrêt (63) est alignée avec une rondelle de caoutchouc (64) disposée sur une surface de butée (65) d'une vis d'écartement (66) de l'implant.

36. Dispositif selon l'une des revendications 1 à 7, 9, 11 à 35, caractérisé en ce que la vis d'écartement (66) de l'implant comporte une partie filetée (67) au voisinage de la surface de butée (65), qui dépasse dans un filetage intérieur (68) prévu dans l'élément d'ancrage (9) dans la région de la bride annulaire (13).

37. Dispositif selon l'une des revendications 1 à 7, 9, 11 à 36, caractérisé en ce que la vis d'écartement (66) de l'implant présente une surface d'appui (69) dirigée vers la bride annulaire (13) et appliquée contre celle-ci.

38. Dispositif selon l'une des revendications 1 à 7, 9, 11 à 37, caractérisé en ce que la vis d'écartement (66) de l'implant présente une surface extérieure (67) qui se rétrécit sensiblement de manière conique dans les directions opposées à la bride annulaire (13).

39. Dispositif selon l'une des revendications 1 à 7, 9, 11 à 38, caractérisé en ce que la surface extérieure (67) de la vis d'écartement (66) de l'implant comporte dans son extrémité détournée de la bride annulaire (13), un évidement annulaire (70) qui avoisine un collet (71) d'extension radiale.

40. Dispositif selon l'une des revendications 1 à 7, 9, 11 à 39, caractérisé en ce que le collet (71) est adapté à une rainure annulaire (72) dans la couronne secondaire (8) dans la région de celle-ci tournée vers ledit collet (71), dans le sens d'une fixation coulissante.

41. Dispositif selon l'une des revendications 1 à 7, 9, 11 à 40, caractérisé en ce que la vis d'écartement (66) de l'implant comporte uns creusure (73) qui la traverse en partie au centre et qui est adaptée dans le sens d'une fixation coulissante aux dimensions du support de couronne (3, 41), et qui comporte en son fond lequel s'étend de manière plane-parallèle par rapport à la bride annulaire (13), une rondelle élastique annulaire en caoutchouc (74) tournée vers la face inférieure (43).

42. Dispositif selon l'une des revendications 1 à 7, 9, 11 à 41, caractérisé en ce que la vis d'écartement (66) de l'implant comporte un alésage central (75) dans lequel la tige (47) du boulon d'implant (48) est fixée de manière coulissante.

43. Dispositif selon l'une des revendications 1 à 42, caractérisé en ce qu'il comprend un foret frontal (38) dont les dimensions sont adaptées à celles de l'élément d'ancrage (9) et à la bride annulaire (13).

44. Dispositif selon la revendication 43, caractérisé en ce que le foret frontal (38) comporte une couronne de perçage (39) dont la forme et les dimensions sont adaptées à celles de l'élément d'ancrage.

45. Dispositif selon l'une des revendications 43 et 44, caractérisé en ce que le foret frontal (38) comprend un disque de fraisage (40) dont la forme et les dimensions sont adaptées à celles de la bride annulaire (13).
